# EUROPÄISCHE PATENTANMELDUNG

(11) **EP 1 180 628 A1**
(43) Veröffentlichungstag der Anmeldung: **20.02.2002**
(21) Anmeldenummer: 00117480.4
(22) Anmeldetag: 12.08.2000
(51) Int. Cl.: F16L 1/11, G01V 15/00

(54) **Vorrichtung zur Ortung von erdverlegten Rohren mit im Rohrbereich angeordneten Schwingkreisen**

(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Honke, Manfred, Dr.-Ing.

(57) **Zusammenfassung**

Es handelt sich um eine Ortungsvorrichtung zur Identifizierung und Lagebestimmung von erdverlegten Kabelschutzrohren (4), wonach Schwingkreise (3) in dem Rohraußenmantel oder Rohrinnenmantel oder in den Kupplungsbereichen der einen Rohrstrang bildenden Rohrschüsse derart angeordnet sind, dass die elektromagnetischen Feldlinien (5) im Bereich der Erdoberfläche mit einer definierten Krümmung verlaufen und in Richtung des erdverlegten Rohrstranges (4) zeigen, so dass sowohl eine Identifizierung als auch definierte Lagebestimmung der Kabelschutzrohre mit Hilfe eines Ortungs- bzw. Lesegerätes (2) möglich ist.

## Beschreibung

Die Erfindung betrifft eine Ortungsvorrichtung zur Identifizierung und/oder Lagebestimmung von erdverlegten Rohren, insbesondere Kabelschutzrohren, mit einem oder mehreren im Rohrbereich angeordneten Schwingkreisen oder Transpondern und mit einem Detektor.

Ein ständiges Problem besteht darin, erdverlegte Rohre und insbesondere Kabelschutzrohre zu identifizieren und deren Lage zu bestimmen. Das kann auch für unter Wasser verlegte Rohre gelten. - Kabelschutzrohre, die regelmäßig aus einzelnen Kunststoff-Rohrschüssen bestehen, dienen zur Bildung einer Rohrleitung bzw. eines Rohrstranges, um darin Kupferkabel oder auch Glasfaserkabel verlegen und gegen das Umfeld schützen zu können. Nach Verlegen der Kabelschutzrohre unter Bildung eines Rohrstranges werden die Kupferkabel oder Glasfaserkabel in den Rohrstrang eingeblasen oder auch eingezogen. Da derartige Kabelschutzrohre bzw. die daraus gebildeten Rohrstränge im Allgemeinen nicht kartografiert werden, besteht im Rahmen von Wartungs-, Reparatur- und/oder Ausbauarbeiten eine Schwierigkeit darin, die Kabelschutzrohre wiederzufinden. Selbst wenn eine derartige Suche erfolgreich verläuft, ist noch nicht sichergestellt, ob es sich tatsächlich um den gewünschten Rohrstrang mit den gesuchten Kupferkabeln oder Glasfaserkabeln handelt. Ein anderes Problem besteht darin, dass derartige Kabelschutzrohre bzw. daraus gebildete Rohrstränge bei Erdarbeiten nicht beschädigt werden dürfen. Aus diesem Grunde kennt man eine Warnvorrichtung für erdverlegte Kabel- und Rohrleitungen, die im Wesentlichen aus einem detektierbaren Trassenband besteht. Dabei handelt es sich um einen Kunststoffstreifen mit zwei oder mehr längslaufenden, metallenen Leitern und zugehörigen leiterspezifischen Verbindern, deren Vorhandensein infolge elektrischer Warnwirkung mit Hilfe handelsüblicher Ortungsgeräte detektiert werden sollen. - Eine derartige Warnvorrichtung ist jedoch zur Identifizierung und exakten Lagebestimmung von erdverlegten Kabelschutzrohren kaum geeignet.

Man hat auch schon das Einziehen von Sendern mit eigener Energieversorgung über Batterien in eine Rohrleitung versucht. Derartige Maßnahmen dienen jedoch im Wesentlichen zur Ortung von Schäden in Abwasserleitungen. Außerdem ist das Einziehen von Sendern in Abhängigkeit von der jeweiligen Rohrbelegung begrenzt. Ferner kennt man das Einziehen eines elektrisch leitfähigen Kabels in Rohrleitungen, an welches ein Sender galvanisch oder induktiv angekoppelt ist. Derartige elektrisch leitfähige Kabel können jedoch nicht permanent eingezogen bleiben, weil aus einem eventuellen Blitzeinschlag erhebliche Gefahren resultieren.

Endlich ist die Verwendung von passiven Schwingkreisen in der Ausführungsform von sogenannten Markern bekannt, welche über Rohrleitungen und folglich separat von diesen Rohrleitungen in den Boden eingegraben und mit entsprechenden Empfängern geortet werden können. Derartige Marker erzeugen kugelförmige elektromagnetische Felder ohne Ausrichtung. Folglich können weder der Verlauf der Rohrleitung noch deren Verlegetiefe hinreichend genau und allenfalls mit erheblichen Schwierigkeiten bestimmt werden.

Der Erfindung liegt die Aufgabe zugrunde, eine Ortungsvorrichtung zu schaffen, mit deren Hilfe sich erdverlegte Rohre und insbesondere Kabelschutzrohre eindeutig identifizieren und hinsichtlich ihrer Lage exakt bestimmen lassen.

Zur Lösung dieser Aufgabe lehrt die Erfindung bei einer gattungsgemäßen Ortungsvorrichtung, dass die Schwingkreise oder Transponder an/in dem Rohraußenmantel und/oder an/in dem Rohrinnenmantel und/oder in den Kupplungsbereichen der einen Rohrstrang bildenden Rohrschüsse und/oder in dem Rohrstrang selbst derart angeordnet sind, dass die elektromagnetischen Feldlinien der Schwingkreise oder Transponder im Bereich der Erdoberfläche mit einer definierten Krümmung verlaufen und in Richtung des erdverlegten Rohrstranges zeigen. - Diese Maßnahmen der Erfindung haben zur Folge, dass eine Ortung der jeweiligen Schwingkreise oder Transponder des betreffenden Rohrstranges mit Ortungs- bzw. Lesesystemen und folglich Detekoren erfolgen können, welche mit entsprechenden Spulen oder Antennen ausgerüstet sind und horizontal auf der Erdoberfläche bewegt werden können. Werden die Spulen oder Antennen eines solchen Ortungs- bzw. Lesesystems bzw. Detektors parallel zur Rohrstrangrichtung gedreht, dann zeigt sich das an einem Maximum der von den vorhandenen Schwingkreisen bzw. Transpondern erzeugten elektromagnetischen Feldstärke an. Somit kann die Richtung des Rohrstranges identifiziert werden. Darüber hinaus ist aber auch eine Lagebestimmung möglich, weil die Lage des Rohrstranges durch ein Verschieben des Ortungs- bzw. Lesesystems oder dergleichen Detektors senkrecht zur Rohrachse ermittelt werden kann. Die Tiefe des Rohrstranges wird im Rahmen der Erfindung durch einen Vergleich der Feldstärke der Ferritspulen der Schwingkreise oder Transponder mit der Feldstärke einer zweiten Detektorspule errechnet. In diesem Zusammenhang ist von erfindungswesentlicher Bedeutung, dass die Schwingkreise oder Transponder sich unmittelbar an in dem Rohrstrang befinden und dadurch nicht nur eine Identifizierung, sondern auch eine besonders exakte Lagebestimmung des Rohrstranges bzw. der Kabelschutzrohre möglich ist.

Weitere erfindungswesentliche Merkmale sind im folgenden aufgeführt. So sieht die Erfindung vor, dass die Schwingkreise oder Transponder im Wege der Extrusion in die Rohraußenwand oder in die Rohrinnenwand der aus Kunststoff bestehenden Rohrschüsse integriert sind, so dass die Schwingkreise oder Transponder beim Einziehen der Kupfer- oder Glasfaserkabel nicht stören. Nach einer anderen Ausführungsform der Erfindung können die Schwingkreise oder Transponder aber auch in ein in den Rohrstrang einzublasendes oder einzuziehendes Trägerkabel integriert sein. Das Trägerkabel weist erfindungsgemäß einen Kunststofffaser- oder Glasfaserkern auf, wobei die Schwingkreise oder Transponder auf dem Kunststofffaser- oder Glasfaserkern fixiert sind und der Kunststoff- oder Glasfaserkern mit den Schwingkreisen oder Transpondern von einem im Wege der Extrusion erzeugten Kunststoffmantel umhüllt sind. Ein solches Trägerkabel überträgt keine elektrischen Ströme und ist folglich unempfindlich gegen Blitzeinschlag. Darüber hinaus kann ein solches Trägerkabel in nahezu unbegrenzte Rohrlängen eingeblasen oder eingezogen werden. - Weiter lehrt die Erfindung, dass die Ferritspulen der Schwingkreise - bei einem Schwingkreis handelt es sich bekanntlich um einen Leiterkreis aus Kondensator und Spule - oder Transponder in axiale Ausrichtung und in vorgegebenen Abständen in die Rohrschüsse und/oder deren Kupplungsbereiche oder in dem Trägerkabel angeordnet sind. Die Zentrierung der Schwingkreise oder Transponder erlaubt neben der Bestimmung des Richtungsverlaufes des Rohrstranges auch dessen Lagebestimmung. Die Schwingkreise oder Transponder können aber auch in die Rohrmuffen oder Einsteckenden der Rohrschüsse eingearbeitet sein. Grundsätzlich empfiehlt es sich, die Innenseiten von z.B. Ferritspulen zylindrisch konisch, doppelkonisch oder mit ähnlicher geometrischer Form auszubilden. Denn durch eine derartige Kontur der Spuleninnenseite wird außerhalb der Ferritspulen im Bereich der Erdoberfläche ein zur Auswertung definierter Verlauf der elektromagnetischen Feldlinien erzeugt. Das Aufsuchen von in vorgegebenen Abständen in dem Rohrstrang oder in einem Trägerkabel angebrachten Schwingkreisen bzw. Transpondern erfolgt durch Messung und Verfolgung der Richtung des betreffenden Rohrstranges. - Im Übrigen können die Schwingkreise oder Transponder als aktive oder passive Schwingkreise oder Transponder ausgebildet sein, die beispielsweise in einem Langwellenbereich mit Eigenfrequenzen unterhalb von 150 kHz vorzugsweise 135 kHz arbeiten. Üblicherweise erfolgt die Energieversorgung der passiven Schwingkreise oder Transponder durch eine von dem Ortungs- bzw. Lesesystem oder dergleichen Detektor ausgesandte elektromagnetische Energie. Hierbei kann es sich um spezielle Signale handeln. Im Allgemeinen geht man jedoch so vor, dass die von dem Ortungs- bzw. Lesesystem ausgesandte elektromagnetische Energie durch von den Schwingkreisen oder Transpondern rohrspezifisch zu verändernde Signale übertragen wird. Diese zu verändernden Signale dienen gleichzeitig der Energieübertragung auf die Schwingkreise oder Transponder. Die Signale lassen sich permanent oder periodisch übertragen. - Aktive Schwingkreise oder Transponder weisen eine eigene Energieversorgung in Form beispielsweise eines Energiespeichers, z.B. Batterie auf. Bei Transpondern dient der Energiespeicher im Allgemeinen dazu, die rohr- und/oder lagespezifischen Daten abzuspeichern. Eine entsprechende Aussendung dieser Daten erfolgt gesteuert von einem Mikroprozessor. Auch in diesem Fall können die von dem Transponder ausgesandten Signale permanent oder periodisch übertragen werden, wobei ein bidirektionaler Datenaustausch zwischen dem Ortungs- bzw. Lesesystem und den Transpondern stattfindet.

Im folgenden wird die Erfindung anhand einer lediglich ein Ausführungsbeispiel darstellenden Zeichnung näher erläutert. Es zeigen:

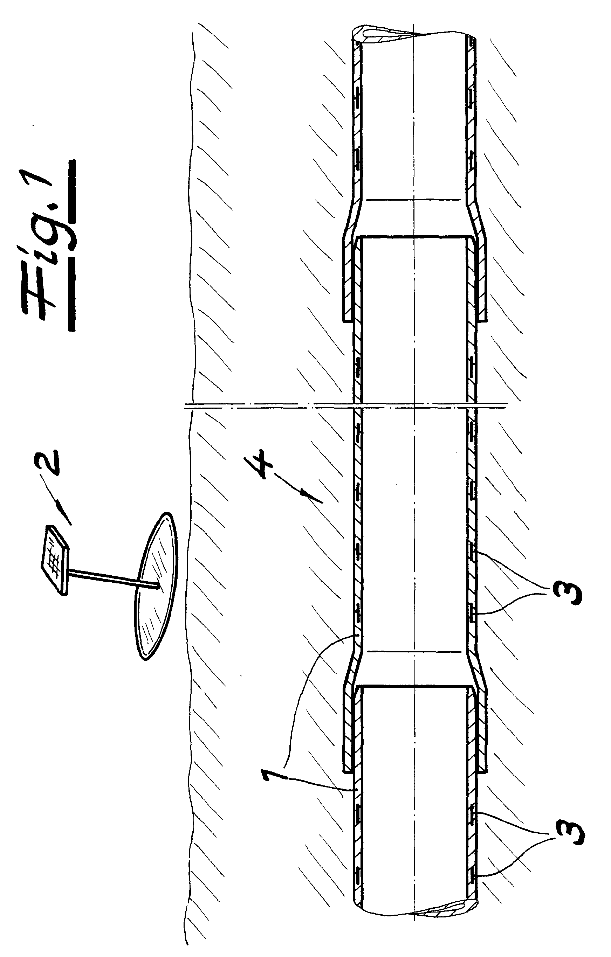

- Fig. 1: in schematischer Darstellung ausschnittsweise einen Rohrstrang aus Kabelschutzrohrschüssen mit darin angeordneten Schwingkreisen und einem auf der Erdoberfläche bewegten Ortungs- bzw. Lesegerät,
- Fig. 2: eine Draufsicht auf den Gegenstand nach Fig. 1 im Bereich eines Schwingkreises,

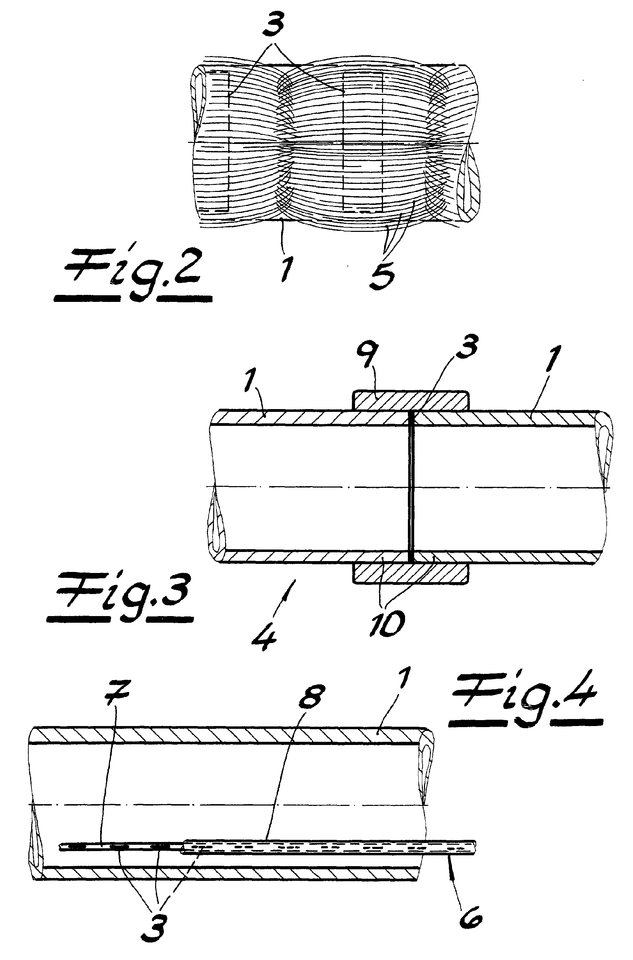

- Fig. 3: teilweise den Gegenstand nach Fig. 1 mit einer Anordnung der Schwingkreise in den Kupplungsbereichen der Rohrschüsse, und
- Fig. 4: ausschnittsweise ein in einen Rohrstrang einzuziehendes Trägerkabel.

In den Figuren ist eine Ortungsvorrichtung zur Identifizierung und Lagebestimmung von erdverlegten Rohren, bei denen es sich um Versorgungsrohre, Entsorgungsrohre aber auch - wie nach dem Ausführungsbeispiel - um Kabelschutzrohre bzw. Rohrschüsse 1 aus Kunststoff handeln kann. Diese Ortungsvorrichtung weist ein Ortungs- bzw. Lesegerät und folglich einen Detektor 2 auf, ferner Schwingkreise 3, welche an/in dem Rohraußenmantel oder an/in dem Rohrinnenmantel oder in den Kupplungsbereichen der einen Rohrstrang 4 bildenden Rohrschüsse 1 oder in dem Rohrstrang 4 selbst angeordnet sind, und zwar derart, dass die elektromagnetischen Feldlinien 5 im Bereich der Erdoberfläche mit einer definierten Krümmung verlaufen und in Richtung des erdverlegten Rohrstranges 4 zeigen - wie das angedeutet ist. Die Schwingkreise 3 sind im Wege der Extrusion in die Rohraußenwand bzw. Rohrinnenwand integriert worden. Sie können aber auch in ein Trägerkabel 6 integriert sein, welches nach dem Ausführungsbeispiel einen Glasfaserkern 7 aufweist, auf dem die Schwingkreise 3 fixiert sind. Der Glasfaserkern 7 mit den Schwingkreisen 3 ist von einem Kunststoffmantel 8 umhüllt.

Die Ferritspulen der Schwingkreise 3 sind in axialer Ausrichtung und in vorgegebenen Abständen in den Rohrschüssen 1 oder deren Kupplungsbereichen zwischen Rohrmuffe 9 und Einsteckende 10 oder aber in dem Trägerkabel 6 angeordnet. Die Innenseiten der Ferritspulen der Schwingkreise 3 sind nach dem Ausführungsbeispiel zylindrisch und die Schwingkreise 3 als passive Schwingkreise ausgebildet.

## Patentansprüche

1. Ortungsvorrichtung zur Identifizierung und/oder Lagebestimmung von erdverlegten Rohren, insbesondere Kabelschutzrohren, mit einem oder mehreren im Rohrbereich angeordneten Schwingkreisen oder Transpondern und mit einem Detektor, **dadurch gekennzeichnet, dass** die Schwingkreise (3) oder Transponder an/in dem Rohraußenmantel und/oder an/in dem Rohrinnenmantel und/oder in den Kupplungsbereichen der einen Rohrstrang (4) bildenden Rohrschüsse (1) und/oder in dem Rohrstrang (4) derart angeordnet sind, dass die elektromagnetischen Feldlinien (5) im Bereich der Erdoberfläche mit einer definierten Krümmung verlaufen und in Richtung des erdverlegten Rohrstranges (4) zeigen.

2. Ortungsvorrichtung nach Anspruch 1, **dadurch gekennzeichnet, dass** die Schwingkreise (3) oder Transponder im Wege der Extrusion in die Rohraußenwand der aus Kunststoff bestehenden Rohrschüsse (1) integriert sind.

3. Ortungsvorrichtung nach Anspruch 1, **dadurch gekennzeichnet, dass** die Schwingkreise (3) oder Transponder im Wege der Extrusion in die Rohrinnenwand der aus Kunststoff bestehenden Rohrschüsse (1) integriert sind.

4. Ortungsvorrichtung nach Anspruch 1, **dadurch gekennzeichnet, dass** die Schwingkreise (3) oder Transponder in ein in den Rohrstrang einzublasendes oder einzuziehendes Trägerkabel (6) integriert sind.

5. Ortungsvorrichtung nach Anspruch 1 oder 4, **dadurch gekennzeichnet, dass** das Trägerkabel (6) einen Kunststofffaser- oder Glasfaserkern (7) aufweist, dass die Schwingkreise (3) oder Transponder auf dem Kunststofffaser- oder Glasfaserkern (7) fixiert sind, und dass der Kunststofffaser- oder Glasfaserkern (7) mit den Schwingkreisen (3) oder Transpondern von einem im Wege der Extrusion erzeugten Kunststoffmantel (8) umhüllt ist.

6. Ortungsvorrichtung nach einem der Ansprüche 1 bis 5, **dadurch gekennzeichnet, dass** beispielsweise Ferritspulen der Schwingkreise (3) oder Transponder in axialer Ausrichtung und in vorgegebenen Abständen in den Rohrschüssen (1) oder deren Kupplungsbereichen oder in dem Trägerkabel (6) angeordnet sind.

7. Ortungsvorrichtung nach einem der Ansprüche 1 bis 6, **dadurch gekennzeichnet, dass** die Schwingkreise (3) oder Transponder in die Rohrmuffen (9) oder Einsteckenden (10) der Rohrschüsse (1) eingearbeitet sind.

8. Ortungsvorrichtung nach einem der Ansprüche 1 bis 7, **dadurch gekennzeichnet, dass** die Innenseiten der Ferritspulen zylindrisch, konisch, doppelkonisch oder mit ähnlicher Geometrie ausgebildet sind.

9. Ortungsvorrichtung nach einem der Ansprüche 1 bis 8, **dadurch gekennzeichnet, dass** die Schwingkreise (3) oder Transponder als aktive oder passive Schwingkreise oder Transponder ausgebildet sind.
